# EUROPÄISCHE PATENTANMELDUNG

(11) **EP 4 838 729 A1**
(43) Veröffentlichungstag der Anmeldung: **11.11.2026**
(21) Anmeldenummer: 26175690.2
(22) Anmeldetag: 30.04.2026
(51) Int. Cl.: H02G 5/02, H01M 50/502, H01M 50/505

(54) **BEFESTIGUNGSVORRICHTUNG FÜR EINE STROMSCHIENE**

(30) Priorität: 05.05.2025 DE 102025117003
(71) Anmelder: Linde Material Handling GmbH, 63743 Aschaffenburg (DE)
(72) Erfinder: Groh, Jonas, 63743 Aschaffenburg (DE)
(74) Vertreter: Patentship Patentanwaltgesellschaft

(57) **Zusammenfassung**

Die Erfindung betrifft eine Befestigungsvorrichtung (1) zur Befestigung einer Stromschiene (2) an einem Trägerelement (3), wobei die Befestigungsvorrichtung (1) einen Klemmhalter (5) und ein Befestigungsmittel (6) umfasst, wobei der Klemmhalter (5) die Stromschiene (2) aufnimmt und der Klemmhalter (5) mittels des Befestigungsmittels (6) an dem Trägerelement (3) befestigbar ist. Der Klemmhalter (5) weist einen C-förmigen Querschnitt auf, wobei der Klemmhalter (5) eine Basisplatte (10), eine an der Basisplatte (10) angeordnete erste Klemmnase (11a) und eine an der Basisplatte (10) angeordnete zweite Klemmnase (11b) umfasst, wobei die Basisplatte (10) und die beiden Klemmnasen (11a, 11b) einen rechteckigen Aufnahmeraum (AR) zur Aufnahme eines rechteckigen Schienenquerschnitts (SQ) der Stromschiene (2) bilden, wobei die Basisplatte (10) eine Montagefläche (MF) zur Anlage an das Trägerelement (3) aufweist und wobei die Klemmnasen (11a; 11b) aus einem elastischen Material bestehen, insbesondere einem elastischen Gummiwerkstoff oder einem elastischen Kunststoffwerkstoff, wobei die erste Klemmnase (11a) und die zweite Klemmnase (11b) jeweils mit einer gegenüberliegend zur Montagefläche (MF) angeordneten Anlagefläche (AFa; AFb) für das Befestigungsmittel (6) versehen sind, wobei das Befestigungsmittel (6) ausgebildet ist, den Klemmhalter (5) an dem Trägerelement (3) zu befestigen und die Klemmnasen (11a, 11b) in Richtung zu der Basisplatte (10) elastisch zu verformen.

## Beschreibung

Die Erfindung betrifft eine Befestigungsvorrichtung zur Befestigung einer Stromschiene an einem Trägerelement, wobei die Befestigungsvorrichtung einen Klemmhalter und ein Befestigungsmittel umfasst, wobei der Klemmhalter die Stromschiene aufnimmt und der Klemmhalter mittels des Befestigungsmittels an dem Trägerelement befestigbar ist.

Derartige Befestigungsvorrichtungen werden zur Befestigung einer Stromschiene an einem Trägerelement, beispielsweise einer Traktionsbatterie eines Fahrzeugs, verwendet.

Bei Traktionsbatterien von Fahrzeugen werden zur bauraumoptimierten und kostengünstigen elektrischen Verbindung zwischen Bauteilen innerhalb der Traktionsbatterie Stromschienen mit einem rechteckigen Querschnitt verwendet.

In Traktionsbatterien von Fahrzeugen ist es bekannt, zur Befestigung von Stromschienen mit einem rechteckigen Querschnitt in der Traktionsbatterie Kabelbinder zu verwenden. Kabelbinder weisen jedoch als Nachteil auf, dass Stromschienen mit einem rechteckigen Querschnitt und somit flache Stromschiene nicht gut geklemmt werden und bei Vibrationen im Betrieb der Traktionsbatterie die Isolierung der Stromschiene durch den Kabelbinder beschädigt werden kann.

In Traktionsbatterien von Fahrzeugen ist es weiterhin bekannt, zur Befestigung von Stromschienen mit einem rechteckigen Querschnitt in der Traktionsbatterie die Stromschienen mit Hilfe einer Befestigungsschraube, die durch eine Bohrung in der Stromschiene hindurchgeführt ist, auf einem isolierten Halter zu befestigen. Eine derartige Befestigung mittels einer Befestigungsschraube ist jedoch bei einer flexiblen Stromschiene in der Regel nicht möglich, da diese nur an den Enden mit einer Bohrung für eine Befestigungsschraube versehen werden kann. Darüber hinaus ist es erforderlich, dass im Bereich der Bohrung bei einer isolierten Stromschiene die Isolierung entfernt werden muss.

Flexible Stromschienen, insbesondere flexible Stromschienen mit einem rechteckigen Querschnitt, bieten jedoch eine kostengünstige und bauraumeffiziente Möglichkeit der elektrischen Leitungsverlegung innerhalb einer Traktionsbatterie eines Fahrzeugs.

Eine flexible Stromschiene, insbesondere eine flexible Stromschiene mit einem rechteckigen Querschnitt, muss jedoch innerhalb der Traktionsbatterie fixiert werden, um einen Kontakt mit anderen Teilen der Traktionsbatterie zu vermeiden, um die Gefahr auszuschließen, dass durch Vibration die Isolierung der Stromschiene beschädigt wird und es hierdurch zu einem Kurzschluss in der Traktionsbatterie kommen kann.

Der vorliegenden Erfindung liegt die Aufgabe zugrunde, eine Befestigungsvorrichtung der eingangs genannten Gattung zur Verfügung zu stellen, mit der eine Stromschiene mit einem rechteckigen Querschnitt, insbesondere eine flexible Stromschiene mit einem rechteckigen Querschnitt, in einfacher und sicherer Weise befestigt werden kann.

Diese Aufgabe wird erfindungsgemäß dadurch gelöst, dass der Klemmhalter einen C-förmigen Querschnitt aufweist, wobei der Klemmhalter eine Basisplatte, eine an der Basisplatte angeordnete erste Klemmnase und eine an der Basisplatte angeordnete zweite Klemmnase umfasst, wobei die Basisplatte und die beiden Klemmnasen einen rechteckigen Aufnahmeraum zur Aufnahme eines rechteckigen Schienenquerschnitts der Stromschiene bilden, wobei die Basisplatte eine Montagefläche zur Anlage an das Trägerelement aufweist und wobei die Klemmnasen aus einem elastischen Material bestehen, insbesondere einem elastischen Gummiwerkstoff oder einem elastischen Kunststoffwerkstoff, wobei die erste Klemmnase und die zweite Klemmnase jeweils mit einer gegenüberliegend zur Montagefläche angeordneten Anlagefläche für das Befestigungsmittel versehen sind, wobei das Befestigungsmittel ausgebildet ist, den Klemmhalter an dem Trägerelement zu befestigen und die Klemmnasen in Richtung zu der Basisplatte elastisch zu verformen.

Der Klemmhalter der erfindungsgemäßen Befestigungsvorrichtung weist einen C-förmigen Querschnitt, in den die rechteckige Stromschiene aufgenommen und mittels der beiden Klemmnasen verklemmt werden kann. Das Befestigungsmittel der erfindungsgemäßen Befestigungsvorrichtung weist eine Doppelfunktion auf und dient einerseits dazu, den Klemmhalter an dem Trägerelement zu befestigen und somit zu montieren, und anderseits dazu, die elastischen Klemmnasen in Richtung zu der Basisplatte elastisch zu verformen und dadurch die in dem Aufnahmeraum des Klemmhalters eingelegte Stromschiene zu verklemmen, so dass mit der erfindungsgemäßen Befestigungsvorrichtung eine Stromschiene mit einem rechteckigen Querschnitt, insbesondere eine elastische Stromschiene mit einem rechteckigen Querschnitt, sicher und in einfacher Weise an dem Trägerelement innerhalb einer Traktionsbatterie fixiert werden kann.

Durch den C-förmigen Querschnitt des Klemmhalters und das elastische Material der Klemmnasen kann der Klemmhalter vor der Montage verliersicher an die Stromschiene geklemmt werden, wodurch eine einfache Montage an dem Trägerelement mittels des Befestigungsmittels erzielt werden kann.

Gemäß einer vorteilhaften Ausgestaltungsform der Erfindung weist die erste Klemmnase einen ersten Hinterschnitt zur Klemmung der in dem rechteckigen Aufnahmeraum angeordneten Stromschiene und die zweite Klemmnase einen zweiten Hinterschnitt zur Klemmung der in dem rechteckigen Aufnahmeraum angeordneten Stromschiene auf. Dies ermöglicht eine sichere Klemmung der Stromschiene in dem Aufnahmeraum des Klemmhalters.

Gemäß einer vorteilhaften Ausgestaltungsform der Erfindung ist zwischen zueinander zugewandt angeordneten Stirnseiten der Klemmnasen ein Schlitz zum Einführen der Stromschiene in den Aufnahmeraum ausgebildet. Dies ermöglicht ein einfaches Einlegen der Stromschiene in den Aufnahmeraum des Klemmhalters.

Gemäß einer vorteilhaften Ausgestaltungsform der Erfindung sind die Klemmnasen an der Basisplatte befestigt. Der aus der Basisplatte und den Klemmnasen bestehende Klemmhalter kann hierbei mehrstückig ausgebildet sein, d.h. als mehrteiliges Bauteil ausgebildet sein, wobei die Klemmnasen aus dem elastischen Material bestehen, insbesondere einem elastischen Gummiwerkstoff oder einem elastischen Kunststoffwerkstoff, und in geeigneter Weise an der Basisplatte befestigt sind.

Gemäß einer vorteilhaften Ausgestaltungsform der Erfindung sind die Klemmnasen an der Basisplatte einstückig ausgebildet, wobei der Klemmhalter aus dem elastischen Material besteht, insbesondere dem elastischen Gummiwerkstoff oder dem elastischen Kunststoffwerkstoff. Der aus der Basisplatte und den Klemmnasen bestehen Klemmhalter ist somit einstückig, d.h. als einteiliges Bauteil, ausgebildet, wobei die Basisplatte und die Klemmnasen aus dem elastischen Material bestehen, insbesondere einem elastischen Gummiwerkstoff oder einem elastischen Kunststoffwerkstoff.

Gemäß einer vorteilhaften Ausgestaltungsform der Erfindung umfasst das Befestigungsmittel eine erste Befestigungsschraube und eine zweite Befestigungsschraube, wobei der Klemmhalter im Bereich der ersten Klemmnase mit einer ersten Aufnahmebohrung zur Aufnahme der ersten Befestigungsschraube und im Bereich der zweiten Klemmnase mit einer zweiten Aufnahmebohrung zur Aufnahme der zweiten Befestigungsschraube versehen ist. Hierdurch kann in einfacher Weise erzielt werden, dass die beiden Klemmnasen mittels der entsprechenden Befestigungsschraube bei der Montage an dem Trägerelement in Richtung zu der Basisplatte elastisch verformt werden, wodurch mit geringem Bauaufwand für die Befestigungsmittel eine sichere Klemmung der Stromschiene in dem Aufnahmeraum des Klemmhalters erzielt werden kann.

Gemäß einer vorteilhaften Ausgestaltungsform der Erfindung ist die erste Aufnahmebohrung in einer ersten starren Hülse ausgebildet, die in dem Klemmhalter angeordnet ist, und die zweite Aufnahmebohrung in einer zweiten starren Hülse ausgebildet ist, die in dem Klemmhalter angeordnet ist. Durch das Einschrauben der Befestigungsschraube in die entsprechende in dem Klemmhalter angeordnete Hülse kann aufgrund der starren Eigenschaften der Hülse und der elastischen Eigenschaften der Klemmnase in einfacher Weise ein elastisches Verformen der Klemmnase erzeugt werden, das zur Klemmung der in dem Aufnahmeraum eingelegten Stromschiene führt.

Gemäß einer vorteilhaften Ausgestaltungsform der Erfindung sind die Hülsen als Metallhülsen, insbesondere Stahlhülsen, ausgebildet. Derartige Metallhülsen weisen einen geringen Bauaufwand auf und können in einfacher Weise in der Klemmnase angeordnet werden und befestigt werden, beispielsweise bei der Ausführung der Klemmnase bzw. des Klemmhalters als Spritzgußbauteil im Spritzgußprozess umspritzt werden.

Gemäß einer vorteilhaften Ausgestaltungsform der Erfindung weisen die Hülsen eine geringere Länge auf als die Höhe des Klemmhalters. Die Hülsen sind somit etwas kürzer als die Höhe des Klemmhalters. Bei der Montage des Klemmhalters durch Anziehen der Befestigungsschrauben wird der Klemmhalter im Bereich der Klemmnasen um diesen definierten Weg komprimiert und klemmt die in den Aufnahmeraum eingelegte Stromschiene fest ein. Die Hülsen verhindern, dass das elastische Material des Klemmhalters beim Anziehen der Befestigungsschrauben zu stark komprimiert und dadurch beschädigt wird. Die Befestigungsschrauben können mit Nenndrehmoment angezogen werden, wodurch eine sichere und reproduzierbare Befestigung des Klemmhalters und somit der Stromschiene in der Traktionsbatterie sichergestellt werden kann.

Die Erfindung betrifft weiterhin eine Traktionsbatterie, insbesondere Lithium-Ionen-Traktionsbatterie, für ein Flurförderzeug umfassend mindestens eine Stromschiene und mindestens eine Befestigungsvorrichtung nach einem der vorangegangenen Ansprüche, wobei der Klemmhalter vorgesehen ist, die Stromschiene innerhalb der Traktionsbatterie zu haltern. Mit dem erfindungsgemäßen Klemmhalter kann eine Stromschiene mit einem rechteckigen Querschnitt, insbesondere eine flexible Stromschiene mit einem rechteckigen Querschnitt, in einfacher und sichere Weise in einer Traktionsbatterie eines Fahrzeugs verlegt und befestigt werden.

Die Erfindung weist eine Reihe von Vorteilen auf.

Die erfindungsgemäße Befestigungsvorrichtung ermöglicht eine einfache und stabile Fixierung einer Stromschiene, insbesondere einer flexiblen Stromschiene mit einem rechteckigen Querschnitt, an dem Trägerelement, beispielsweise innerhalb einer Traktionsbatterie eines Fahrzeugs.

Die erfindungsgemäße Befestigungsvorrichtung ermöglicht weiterhin, dass Beschädigung des Isolationsmaterials der in dem Klemmhalter fixierten Stromschiene bei Stößen und Vibrationen wirksam vermieden werden können.

Mit dem erfindungsgemäßen Klemmhalter sind keine Bohrungen in der Stromschiene zu deren Fixierung an dem Trägerelement erforderlich.

Die erfindungsgemäße Befestigungsvorrichtung ermöglicht weiterhin, dass in einer Traktionsbatterie eine Fahrzeugs lange, auch mehrfach gebogene flexible Stromschienen verwendet werden können.

Bei der erfindungsgemäßen Befestigungsvorrichtung ist eine Vormontage des Klemmhalters an der Stromschiene möglich, dadurch kann der Klemmhalter sehr effizient und einfach an dem Trägerelement montiert werden.

Der Klemmhalter kann sich aufgrund des elastischen Materials und der damit einhergehenden elastischen Eigenschaften in einfacher Weise an Toleranzen der Stromschiene anpassen, beispielsweise bezüglich der Dicke einer Isolationsschicht und/oder der Abmessungen der Stromschiene.

Sofern das elastische Material des Klemmhalters elektrisch isolierend ist und eine isolierte Stromschiene verwendet wird, kann an der Verbindungsstelle des Klemmhalters an dem Trägerelement in einfacher Weise eine doppelte bzw. verstärkte Isolierung erzielt werden.

Weitere Vorteile und Einzelheiten der Erfindung werden beispielhaft anhand des in den schematischen Figuren dargestellten Ausführungsbeispiels näher erläutert. Hierbei zeigt
- Figur 1: eine Klemmhalter einer erfindungsgemäßen Befestigungsvorrichtung in einer perspektivischen Darstellung,
- Figur 2: den Klemmhalter der Figur 1 in einem Längsschnitt,
- Figur 3: eine weitere Darstellung des Klemmhalters der Figur 1 in einem Längsschnitt,
- Figur 4: eine erfindungsgemäße Befestigungsvorrichtung mit einer an einem Trägerelement geklemmten Stromschiene und
- Figur 5: einen Schnitt durch die Befestigungsvorrichtung und die Stromschiene der Figur 4.

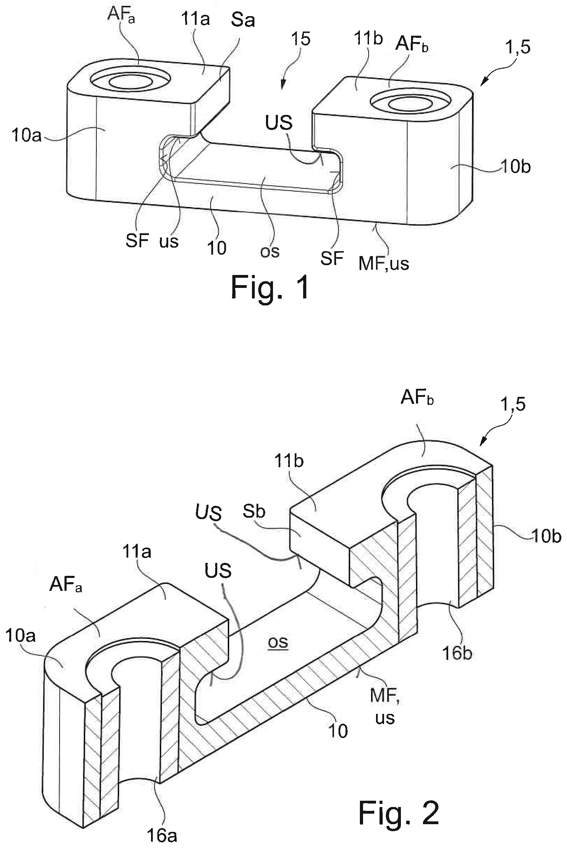

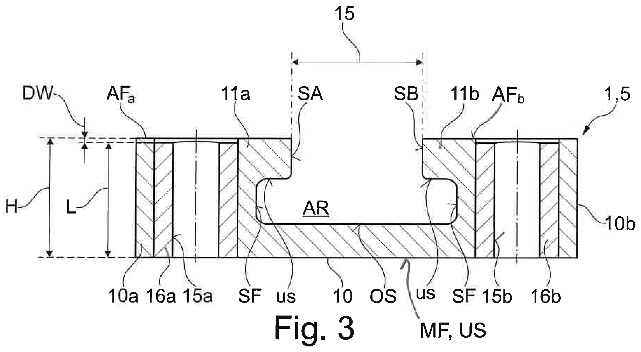

In den Figuren 1 bis 5 ist eine Befestigungsvorrichtung 1 dargestellt, mit der eine Stromschiene 2 an einem Trägerelement 3 befestigbar ist.

Das Trägerelement 3 ist Bestandteil einer Traktionsbatterie 4, beispielsweise einer Lithium-Ionen-Traktionsbatterie, eines Flurförderzeugs.

Die Befestigungsvorrichtung 1 umfasst einen Klemmhalter 5 und ein Befestigungsmittel 6, wobei der Klemmhalter 5 die Stromschiene 2 aufnimmt und der Klemmhalter 5 mittels des Befestigungsmittels 6 an dem Trägerelement 3 befestigbar ist.

Das Trägerelement 3 ist bevorzugt innerhalb der Traktionsbatterie 4 angeordnet, so dass mit dem Klemmhalter 5 die Stromschiene 2 innerhalb der Traktionsbatterie gehaltert wird.

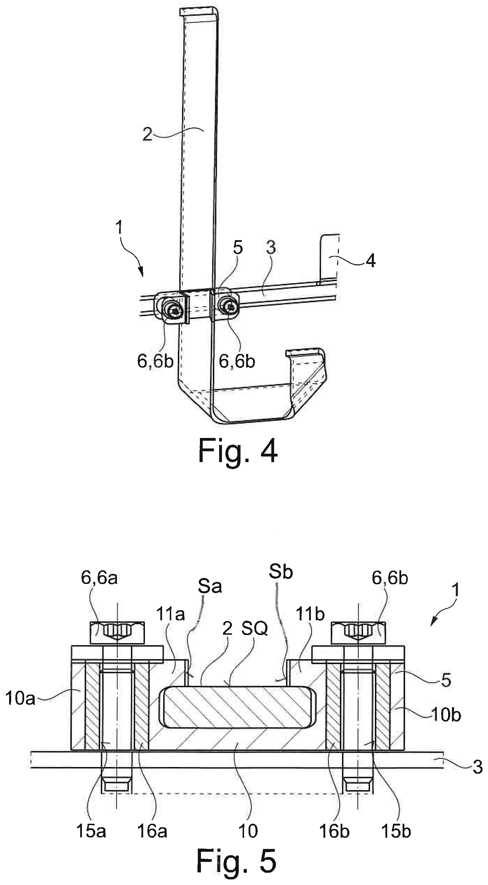

Die Figuren 4 und 5 zeigen den Klemmhalter 5 und das Befestigungsmittel 6 der Befestigungsvorrichtung 1 im montierten Zustand, wobei der Klemmhalter 5 die Stromschiene 2 aufnimmt und der Klemmhalter 5 mittels des Befestigungsmittels 6 an dem Trägerelement 3 der Traktionsbatterie 4 befestigt ist.

Die Figuren 1 bis 3 zeigen den Klemmhalter 5 der Befestigungsvorrichtung 1 als Einzelteil.

Der Klemmhalter 5 weist einen C-förmigen Querschnitt auf. Der Klemmhalter 5 umfasst hierzu eine Basisplatte 10, eine an der Basisplatte 10 angeordnete erste Klemmnase 11a und eine an der Basisplatte 10 angeordnete zweite Klemmnase 11b.

Die erste Klemmnase 11a ist an einer an der Oberseite OS der Basisplatte 10 angeordneten ersten säulenartigen Erhöhung 10a und die zweite Klemmnase 11b an einer an der Oberseite der Basisplatte 10 angeordneten zweiten säulenartigen Erhöhung 10b angeordnet.

Die Basisplatte 10 und die beiden Klemmnasen 11a, 11b bilden mit der Oberseite OS des Basisplatte 10, den Unterseiten US der Klemmnasen 11a, 11b und Seitenflächen SF der säulenartigen Erhöhungen 10a, 10b einen rechteckigen Aufnahmeraum AR zur Aufnahme eines rechteckigen Schienenquerschnitts SQ der Stromschiene 2.

Die beiden Klemmnasen 11a, 11b sind aufeinander zuweisend angeordnet, wobei die beiden aufeinander zugewandt angeordneten Stirnseiten Sa, Sb der Klemmnasen 11a, 11b voneinander beabstandet sind und einen Schlitz 15 zum Einführen der Stromschiene 2 in den Aufnahmeraum AR ausbilden.

Die Basisplatte 10 weist eine Montagefläche MF zur Anlage an das Trägerelement 3 auf, die von der Unterseite US der Basisplatte 10 gebildet ist.

Im dargestellten Ausführungsbeispiel sind die beiden Klemmnasen 11a, 11b an der Basisplatte 10 einstückig ausgebildet, wobei der Klemmhalter 5 aus dem elastischen Material besteht, beispielsweise einem elastischen Gummiwerkstoff oder einem elastischen Kunststoffwerkstoff.

Die erste Klemmnase 11a ist mit einer gegenüberliegend zur Montagefläche MF angeordneten Anlagefläche AFa für das Befestigungsmittel 6 versehen. Die Anlagefläche AFa ist an der Oberseite der ersten Klemmnase 11a bzw. der säulenartigen Erhöhung 10a ausgebildet.

Die zweite Klemmnase 11b ist mit einer gegenüberliegend zur Montagefläche MF angeordneten Anlagefläche AFb für das Befestigungsmittel 6 versehen. Die Anlagefläche AFb ist an der Oberseite der ersten Klemmnase 11b bzw. der säulenartigen Erhöhung 10b ausgebildet.

Das Befestigungsmittel 6 ist ausgebildet, den Klemmhalter 5 an dem Trägerelement 3 zu befestigen und die Klemmnasen 11a, 11b in Richtung zu der Basisplatte 10 elastisch zu verformen.

Die erste Klemmnase 11a bildet hierzu mit der Unterseite US einen ersten Hinterschnitt zur Klemmung der in dem rechteckigen Aufnahmeraum AR angeordneten Stromschiene 2 und die zweite Klemmnase 11b mit der Unterseite US einen zweiten Hinterschnitt zur Klemmung der in dem rechteckigen Aufnahmeraum AR angeordneten Stromschiene 2.

Das Befestigungsmittel 6 umfasst im dargestellten Ausführungsbeispiel eine erste Befestigungsschraube 6a und eine zweite Befestigungsschraube 6b. Der Klemmhalter 5 ist im Bereich der ersten Klemmnase 11a mit einer ersten Aufnahmebohrung 15a zur Aufnahme der ersten Befestigungsschraube 6a und im Bereich der zweiten Klemmnase 11b mit einer zweiten Aufnahmebohrung 15b zur Aufnahme der zweiten Befestigungsschraube 6b versehen.

Die erste Aufnahmebohrung 15a ist in einer ersten starren Hülse 16a ausgebildet, die in dem Klemmhalter 5 angeordnet ist. Die erste Hülse 16a ist im dargestellten Ausführungsbeispiel in der säulenartigen Erhebung 10a angeordnet. Die zweite Aufnahmebohrung 15b ist in einer zweiten starren Hülse 16b ausgebildet, die in dem Klemmhalter 5 angeordnet ist. Die zweite Hülse 16b ist im dargestellten Ausführungsbeispiel in der säulenartigen Erhebung 10b angeordnet.

Die Hülsen 16a, 16b können als Metallhülsen, beispielsweise Stahlhülsen, ausgebildet sein. Alternativ können die Hülsen 16a, 16b als Kunststoffhülsen ausgebildet sein, die starrer als das Material des elastischen Klemmhalters 5 ist.

Die Hülsen 16a, 16b sind mit der Unterseite bündig mit der Montagefläche MF im Klemmhalter 5 angeordnet.

Die Hülsen 16a, 16b weisen jeweils eine Länge L auf, die geringer als die Höhe H des Klemmhalters 5 ist. Die Höhe H des Klemmhalters 5 erstreckt sich von der Montagefläche MF an der Unterseite US des Klemmhalters 5 bis zu den Anlageflächen AFa, AFb an der Oberseite des Klemmhalters 5.

Die Differenz zwischen der Höhe H des Klemmhalters 5 und der Länge L der starren Hülsen 16a, 16b bildet einen Deformationsweg DW, um den die Klemmnasen 11a, 11b beim Einschrauben der Befestigungsschrauben 6a, 6b, die direkt oder mittels Unterlegscheiben an den Anlagefläche AFa, AFb der Klemmnasen 11a, 11b anliegen, nach unten in Richtung zur Oberseite OS der Basisplatte 10 elastisch verformt werden können, wodurch die in den Aufnahmeraum AR eingelegte Stromschiene 2 von den nach unten verformten Klemmnasen 11a, 11b im Aufnahmeraum AR verklemmt und somit fixiert wird.

Durch die C-Form und das elastische Material kann der Klemmhalter 5 vor der Montage an dem Trägerelement 3 verliersicher an die Stromschiene 2 geklemmt werden, wobei die Stromschiene 2 über den Schlitz 15 zwischen den beiden Klemmnasen 11a, 11b in den Aufnahmeraum AR eingeführt werden kann. Hierdurch wird eine einfache Montage des Klemmhalters 5 und der Stromschiene 2 an dem Trägerelement 3 ermöglicht.

Bei der Montage des Klemmhalters 5, in dem die Stromschiene 2 in den Aufnahmeraum AR eingelegt ist, werden die beiden Befestigungsschrauben 6a, 6b in die Aufnahmebohrungen 15a, 15b eingeführt und anschließend durch Anziehen der Befestigungsschrauben 6a, 6b der Klemmhalter 5 an dem Trägerelement 3 befestigt. Durch das Anziehen der Befestigungsschrauben 6a, 6b werden die Klemmnasen 11a, 11b um den definierten Deformationsweg DW komprimiert und klemmen die Stromschiene 2 in dem Aufnahmeraum AR fest ein. Die starren Hülsen 16a, 16b verhindern hierbei, dass das elastische Material des Klemmhalters 5 zu stark komprimiert und dadurch beschädigt wird. Die Befestigungsschrauben 6a, 6b könne bei der Montage des Klemmhalters 5 an dem Trägerelement 3 mit Nenndrehmomentmoment angezogen werden.

Die Erfindung ist nicht auf das dargestellte Ausführungsbeispiel beschränkt.

Der Klemmhalter 5 kann von seinen Abmessungen und den Abmessungen des Aufnahmeraum s AR auf andere Stromschienen 2 angepasst werden.

Die Hülsen 16a, 16b können als Metallhülsen oder als starre Kunststoffhülsen ausgebildet sein.

Der Klemmhalter 5 kann als 2K-Kunststoffteil gefertigt werden, mit einer Kombination aus weichem Kunststoff an der Basisplatte 10 und den Klemmnasen 11a, 11b und hartem Kunststoff an den Hülsen 16a, 16b.

Die Stromschiene 2 kann als isolierte Stromschiene mit einer Isolierung ausgebildet sein. Bei entsprechenden Isolationseigenschaften eines als Kunststoffbauteils ausgebildeten Klemmhalters 5 kann gegebenenfalls auf die Isolierung der Stromschiene 2 verzichtet werden.

## Patentansprüche

1. Befestigungsvorrichtung (1) zur Befestigung einer Stromschiene (2) an einem Trägerelement (3), wobei die Befestigungsvorrichtung (1) einen Klemmhalter (5) und ein Befestigungsmittel (6) umfasst, wobei der Klemmhalter (5) die Stromschiene (2) aufnimmt und der Klemmhalter (5) mittels des Befestigungsmittels (6) an dem Trägerelement (3) befestigbar ist, **dadurch gekennzeichnet, dass** der Klemmhalter (5) einen C-förmigen Querschnitt aufweist, wobei der Klemmhalter (5) eine Basisplatte (10), eine an der Basisplatte (10) angeordnete erste Klemmnase (11a) und eine an der Basisplatte (10) angeordnete zweite Klemmnase (11b) umfasst, wobei die Basisplatte (10) und die beiden Klemmnasen (11a, 11b) einen rechteckigen Aufnahmeraum (AR) zur Aufnahme eines rechteckigen Schienenquerschnitts (SQ) der Stromschiene (2) bilden, wobei die Basisplatte (10) eine Montagefläche (MF) zur Anlage an das Trägerelement (3) aufweist und wobei die Klemmnasen (11a; 11b) aus einem elastischen Material bestehen, insbesondere einem elastischen Gummiwerkstoff oder einem elastischen Kunststoffwerkstoff, wobei die erste Klemmnase (11a) und die zweite Klemmnase (11b) jeweils mit einer gegenüberliegend zur Montagefläche (MF) angeordneten Anlagefläche (AFa; AFb) für das Befestigungsmittel (6) versehen sind, wobei das Befestigungsmittel (6) ausgebildet ist, den Klemmhalter (5) an dem Trägerelement (3) zu befestigen und die Klemmnasen (11a, 11b) in Richtung zu der Basisplatte (10) elastisch zu verformen.

2. Befestigungsvorrichtung nach Anspruch 1, **dadurch gekennzeichnet, dass** die erste Klemmnase (11a) einen ersten Hinterschnitt zur Klemmung der in dem rechteckigen Aufnahmeraum (AR) angeordneten Stromschiene (2) und die zweite Klemmnase (11b) einen zweiten Hinterschnitt zur Klemmung der in dem rechteckigen Aufnahmeraum (AR) angeordneten Stromschiene (2) aufweist.

3. Befestigungsvorrichtung nach Anspruch 1 oder 2, **dadurch gekennzeichnet, dass** zwischen zueinander zugewandt angeordneten Stirnseiten (Sa, Sb) der Klemmnasen (11a, 11b) ein Schlitz (15) zum Einführen der Stromschiene (2) in den Aufnahmeraum (AR) ausgebildet ist.

4. Befestigungsvorrichtung nach einem der Ansprüche 1 bis 3, **dadurch gekennzeichnet, dass** die Klemmnasen (11a, 11b) an der Basisplatte (10) befestigt sind.

5. Befestigungsvorrichtung nach einem der Ansprüche 1 bis 3, **dadurch gekennzeichnet, dass** die Klemmnasen (11a, 11b) an der Basisplatte (10) einstückig ausgebildet sind, wobei der Klemmhalter (5) aus dem elastischen Material besteht, insbesondere dem elastischen Gummiwerkstoff oder dem elastischen Kunststoffwerkstoff.

6. Befestigungsvorrichtung nach einem der Ansprüche 1 bis 5, **dadurch gekennzeichnet, dass** die Befestigungsmittel (6) eine erste Befestigungsschraube (6a) und eine zweite Befestigungsschraube (6b) umfassen, wobei der Klemmhalter (5) im Bereich der ersten Klemmnase (11a) mit einer ersten Aufnahmebohrung (15a) zur Aufnahme der ersten Befestigungsschraube (6a) und im Bereich der zweiten Klemmnase (11b) mit einer zweiten Aufnahmebohrung (15b) zur Aufnahme der zweiten Befestigungsschraube (6b) versehen ist.

7. Befestigungsvorrichtung nach Anspruch 6, **dadurch gekennzeichnet, dass** die erste Aufnahmebohrung (15a) in einer ersten starren Hülse (16a) ausgebildet ist, die in dem Klemmhalter (5) angeordnet ist, und die zweite Aufnahmebohrung (15b) in einer zweiten starren Hülse (16b) ausgebildet ist, die in dem Klemmhalter (5) angeordnet ist.

8. Befestigungsvorrichtung nach Anspruch 7, **dadurch gekennzeichnet, dass** die Hülsen (1a, 16b) als Metallhülsen, insbesondere Stahlhülsen, ausgebildet sind.

9. Befestigungsvorrichtung nach Anspruch 7 oder 8, **dadurch gekennzeichnet, dass** die Hülsen (16a; 16b) eine geringere Länge (L) aufweisen als die Höhe (H) des Klemmhalters (5).

10. Traktionsbatterie (4), insbesondere Lithium-Ionen-Traktionsbatterie, für ein Flurförderzeug umfassend mindestens eine Stromschiene (2) und mindestens eine Befestigungsvorrichtung (1) nach einem der vorangegangenen Ansprüche, wobei der Klemmhalter (5) vorgesehen ist, die Stromschiene (2) innerhalb der Traktionsbatterie (4) zu haltern.
